# EUROPÄISCHE PATENTANMELDUNG

(11) **EP 1 843 067 A2**
(43) Veröffentlichungstag der Anmeldung: **10.10.2007**
(21) Anmeldenummer: 07466009.3
(22) Anmeldetag: 04.04.2007
(51) Int. Cl.: F16K 15/02

(54) **Das hydraulisch betätigte Rückschlagventil**

(30) Priorität: 06.04.2006 CZ 20060234
(71) Anmelder: Zaalex s.r.o., 747 81 Otice (CZ)
(72) Erfinder: Schaumann, Jindrich, 746 01 Opava (CZ); Kostrica, Zdenek, 747 81 Otice (CZ); Sevcik, Petr, 700 30 Ostrava Hrabuvka (CZ)

(57) **Zusammenfassung**

Das hydraulisch betätigte Rückschlagventil für die Steuerung der hydraulischen Zylinder der mechanisierten Armaturen der Tiefbaugruben oder der hydraulischen Zylinder von anderen Einrichtungen und Maschinen, die mit den Druckwerten der Druckflüssigkeit im Intervall von 0 Mpa bis auf cca. 50 Mpa arbeiten, mit dem ND meistens 32 Mpa, besteht aus dem hydraulischen Hauptzylinder (3) mit dem Steuerkolben (4), der mit einem Verschlusskegel (10) ausgestattet ist, der durch eine Feder (9) gegen die Dichtungsscheibe (8), die im Durchgangsraum zwischen der Zuleitung (14) der Druckflüssigkeit in den Hauptzylinder (3) und den Verteiler aus diesem Zylinder (3) platziert ist, belastet ist. An den hydraulischen Hauptzylinder (3) ist axial der hydraulische Hilfszylinder (5) mit dem Schaltkolben (6)des Steuerkolbens (4) angeschlossen. Der hydraulische Hilfszylinder (5) ist hydraulisch mit der Zuleitung (16) der gesteuerten Öffnung des Rückschlagventils, das hydraulisch mit dem Raum des hydraulischen Hilfszylinders (5) durch ein Kanälchen (7) verbunden ist, verbunden. Das Kanälchen ist gegen die anliegende Fläche des Steuerkolbens (6) mit dem Boden des hydraulischen Hilfszylinders (5) ausgemündet. Die Größe der Fläche des Kanälchens (7) und die Größe der anliegenden Fläche des Schaltkolbens (6) ist im Verhältnis mindestens 1:800. Für die hydraulische Verbindung der Zuleitung (14) mit der Verteilung (15) ist der Steuerkolben (4) des hydraulischen Hauptzylinders (3) mit dem Durchgangshohlraum (18), mit mindestens einem Radialloch (11), ausgestattet. Es mündet aus diesem Hohlraum (18) vor dem Verschlusskegel an dem Steuerkolben (4).

## Beschreibung

### Bereich der Technik

Die Erfindung betrifft das hydraulisch betätigte Rückschlagventil für die Steuerung von den einzelnen Funktionen der hydraulischen Zylinder von mechanisierten Armaturen der Tiefbaugruben oder für die Steuerung von den hydraulischen Zylindern anderer Anlagen und Maschinen, die mit dem Flüssigkeitsdruck im Intervall von 0 Mpa bis zum ungefähr 50 Mpa, mit dem ND meistens 32 Mpa, wo das hydraulische Medium gewöhnlich die Wasseremulsion, d.h. Wasser mit einem bestimmten Gehalt von Beschichtungs- und

Konservierungszugabe, ist, arbeiten.

### Bisheriger Stand der Technik

Die hydraulisch betätigten Rückschlagventile bestehen aus dem Gehäuse, in welchem das System der Kanäle für die Zuleitung der Hochdruckflüssigkeit, für ihre Abgabe, bzw. Verteilung aus dem Ventil in die hydraulische Anlage, für die geregelte Steuerung des Rückschlagventils und für ihre Ablassung aus der hydraulischen Anlage durch das Rückschlagventil, geschaffen ist. Quer über diese Kanäle gibt es im Gehäuse des Ventils eine Zylinderkammer, in welcher die Grundfunktionselemente des Rückschlagventils und abstützende Elemente für seine geregelte Steuerung platziert sind. Die Grundfunktionselemente beinhalten einen hydraulischen Hauptzylinder mit dem Steuerkolben und einen axial angeschlossenen hydraulischen Nebenzylinder mit dem Schaltkolben des Steuerkolbens. Der Hauptzylinder ist an den Zuleitungs- und Ablassungskanal und an den Verteilungskanal der Druckflüssigkeit angeschlossen. Der Nebenzylinder ist an den Kanal der geregelten Steuerung des Rückschlagventils angeschlossen. Der Steuerkolben ist mit einem Schlusskegel und einer Druckfeder, mit welcher der Steuerkolben und damit auch der Schlusskegel gegen die Dichtungsscheibe im Raum des hydraulischen Hauptzylinders vor dem Steuerkolben belastet sind und dabei dieser Raum an den Verteilungskanal der Druckflüssigkeit aus dem Rückschlagventil angeschlossen ist , ausgestattet. Der Steuerkolben ist in der Richtung vom Schlusskegel des Steuerkolbens durch eigene Feder und gegen ihn durch den Flüssigkeitsdruck aus dem Steuerkanal belastet.Bei der Tätigkeit des Rückschlagventils in dieser Grundordnung kommt, es durch die Wirkung der Strömung der Flüssigkeit bei hohem Druck zum Einsetzen von Schwingungen und zur Entstehung von Stößen im hydraulischen Leitungskreis.

Zur Vermeidung der Entstehung von dieser unerwünschten Erscheinung gibt es bei den Rückschlagventilen, die im Modus der hohen Druckwerte arbeiten, in ihre Konstruktionen eingefügte Reduktionselemente, die im Vorlauf die Senkung des Betriebsdrucks der Flüssigkeit im hydraulischen Hauptzylinder und im Verteilungskanal vor der geregelten Öffnung des Rückschlagventils und Ablassung der Druckflüssigkeit ermöglichen. Bekannt ist z.B. die Lösung des hydraulisch betätigten Rückschlagventils mit einem solchen Element nach der Patentanmeldung DE 1998/19813909 und nach dem Patent CZ 293180.

Nach dieser Lösung ist das Entlastungsventil in offenem Zylinderhohlraum des Steuerkolbens, vor seiner Druckfeder, wo der Zylinderhohlraum durch die Öffnung im Schlusskegel an den Verteilungskanal des Rückschlagventils angeschlossen ist, platziert. Das Entlastungsventil bildet ein Kegel mit einem Bolzen, der in der Dichtungscheibe der Öffnung des Schlusskegels vom Steuerkolben,aus welchem er in der geschlossenen Position herausragt, eingelegt ist. Der Steuerkolben wird vom Schaltkolben, mittels welchem dessen durch seinen Druck auf den Bolzen der Kegel zuerst das Entlastungsventil geöffnet wird und so wird der Druck der Flüssigkeit, die den Steuerkolben belastet, gesenkt, verschoben. Folgend wird der Schlusskegel des Steuerkolbens aus der Dichtungscheibe herausgezogen und das ermöglicht die Ablassung der Druckflüssigkeit aus dem Verteilungskanal durch das Rückschlagventil in den Ablassungskanal. Die Senkung des Flüssigkeitsdrucks erleichtert die geregelte Öffnung des Rückschlagventils und schwächt oder verhindert auch die Vibrationen und Stöße im hydraulischen System, die vor allem als Folge des Einsetzens von Schwingungen des Steuerkolbens im Hauptzylinder entstehen, wegen der abfließenden Flüssigkeit unter Hochdruck.

Bei bestimmten spezifischen Bedingungen der Druckwerte und Geschwindigkeiten der Flüssigkeitsströmung kann es trotzdem bei der Füllung des Rückschlagventils oder bei seiner geregelten hydraulischen Öffnung zum unerwünschten Einsetzen von Schwingungen kommem und zwar vor allem des Kegels des Entlastungsventils. Das bringt folgend das Einsetzen von Schwingungen der Flüssigkeit, Änderungen des Durchflusses durch das Rückschlagventil und so die Entstehung von Stößen, nicht nur im hydraulischen Ventil selbst, sondern auch in den weiteren Schaltelementen, Schläuchen und hydraulischen Zylindern. Die unerwünschten Stöße bilden dann das Risiko der Beschädigung von einzelnen Teilen des hydraulischen Leitungskreises und auch der ganzen hydraulischen Anlage, z.B. der mechanisierten Armatur .

Wegen den Stößen kann man nur sehr schwierig die dynamische Stabilität der Funktion der bis heute hergestellten hydraulisch geregelten Rückschlagventile, vor allem bei Druckschwankungen gegen die gewünschten Werte in einzelnen Zweigen des hydraulischen Leitungskreis,es garantieren. Die Gebrauchsdauer und die Zuverlässigkeit des ganzen Anlagesystems sind negativ beeinflusst, die Zahl von Betriebsstörungen der Anlage steigt, auch die Kosten für die Ersatzteile und die Verluste, die durch Ausfälle der Betriebsstunden entstehen, steigen. Ein solcher Zustand stellt eine gefährliche Situation auch für die Bedienung der hydraulischen Anlagen dar. Der Nachteil der Rückschlagventile, die mit dem Entlastungsventil ausgestattet sind, ist, dass sie ziemlich kompliziert in der Konstruktion sind, in Hinsicht auf die Anzahl von dynamischen Elementen, als auch in Hinsicht auf die Betriebsansprüche. Das Ziel von dieser Erfindung ist die Vereinfachung der bisherigen Lösungen von hydraulisch betätigten Rückschlagventilen mit maximaler Senkung der unerwünschten Schwingungen und Stöße bei hoher Funktionszuverlässigkeit.

### Das Wesentliche der Erfindung

Das Wesentliche der Erfindung liegt in der neuen technischen Lösung und der gegenseitigen Anordnung der Grundfunktionselemente des hydraulisch betätigten Rückschlagventils, durch welche die Entstehung der Schwingungen und hydraulischer Stöße im hydraulischen Leitungskreis verhindert wird und zwar im breiten Umfang der gewünschten Durchflüsse und

Flüssigkeitsdruckwerte und so wird die stabilisierte und geregelte Öffnung und Schließung des Rückschlagventils gesichert.

Diese Eigenschaften erfüllt die Lösung des hydraulisch betätigten Rückschlagventils für die Steuerung der hydraulischen Zylinder nach dieser Erfindung, das aus einem Gehäuse , wo es einen hydraulischen Hauptzylinder mit einem Steuerkolben gibt, besteht. Der Steuerkolben ist mit einem Schlusskegel ausgestattet. Der Schlusskegel ist mit einer Druckfeder gegen die Dichtungscheibe, die im Durchflussraum der Druckflüssigkeit unter den Zuleitungskanälen der Druckflüssigkeit in diesen Zylinder und der Verteilung aus diesem Zylinder platziert ist, belastet. Die Kanäle sind in diesem Gehäuse eingerichtet. An den hydraulischen Hauptzylinder ist axial ein hydraulischer Hilfszylinder mit einem Schaltkolben des Steuerungskolbens angeschlossen . Der hydraulische Hilfszylinder ist hydraulisch an den Zuleitungskanal der geregelten Öffnung des Rückschlagventils angeschlossen.

Das eigentlich Wesentliche an der Lösung nach der Erfindung liegt darin, dass der Zuleitungskanal der Druckflüssigkeit für die hydraulisch geregelte Öffnung des Rückschlagventils mit dem Raum des hydraulischen Hilfszylinders durch ein Kanälchen hydraulisch verbunden ist. Dieses Kanälchen kann gegen die Fläche des Schaltkolbens, anliegend an den Boden des hydraulischen Hilfszylinders, münden .Die Größe der Fläche des Kanälchens und die Größe dieser anliegenden Fläche des Schaltkolbens ist im Verhältnis mindestens 1 : 800 und der. Steuerkolben vom hydraulischen Hauptzylinder ist mit einem axialen Durchgangshohlraum für die hydraulische Verbindung des Zuleitungskanals mit dem Verteilungskanal ausgestattet. Der axiale Durchgangshohlraum hat mindestens ein Radialloch, das aus dem Durchgangshohlraum des Steuerkolbens an seine Zylinderoberfläche mündet, vor dem Schlusskegel des Steuerkolbens.

Das Wesentliche an der Lösung des hydraulisch betätigten Rückschlagventils nach der Erfindung bilden weiter seine folgenden konkreten Bearbeitungen.

Die Größe der Fläche des Schaltkolbens und der Zwischenkreisfläche des Schlusskegels des Steuerkolbens ist im Verhältnis 1,6 bis 5 : 1 durchgeführt.

Das Kanälchen des hydraulischen Hilfszylinder ist in seiner Wand oder in seinem Boden, der in diesem Fall mit einer Frontfläche von einem Gewindeverschluss mit einem Spalt für die hydraulische Verbindung des Kanälchens mit dem Zuleitungskanal der hydraulisch geregelten Öffnung des Rückschlagventils und für die Druckflüssigkeitsfiltration abgedeckt ist, geleitet.

Die Binnenräume des hydraulischen Hauptzylinders der Dichtungscheibe und des hydraulischen Hilfszylinders bilden eine gemeinsame Kammer für den Vorschub des Steuerkolbens und Schaltkolbens.

### Die Aufrissübersicht

In dem beigelegenen Aufriss ist die musterhafte Ausführung von dem hydraulisch betätigten

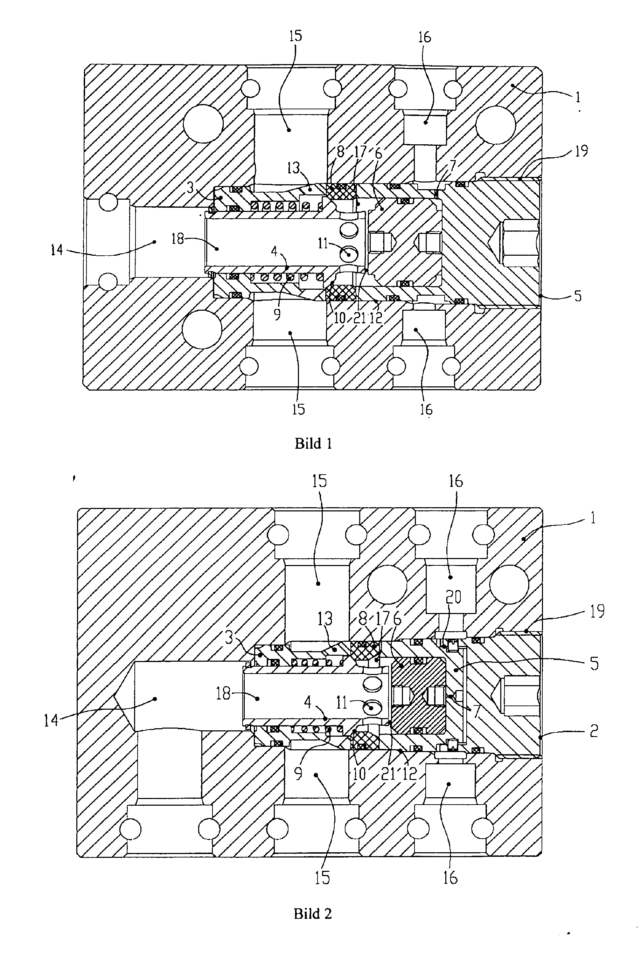

Rückschlagventil nach der Erfindung im Aufriss dargestellt. Bild 1 stellt die Grundausführung dieses Rückschlagventils dar und Bild 2 ist dasselbe Ventil in der Variante mit einem Filtrierungsspalt der Druckflüssigkeit.

### Beispiele der Erfindungsausführung

Das hydraulisch betätigte Rückschlagventil in der Ausführung nach Bild 1 besteht aus dem Gehäuse 1, wo eine Zylinderauskammerung 12 nachgebohrt ist, wo der hydraulische Hauptzylinder 3 mit einem Steuerkolben 4, in dessen Leitungskreis der Schlusskegel 10 ausgeführt ist, platziert ist. Dieser Schlusskegel ist gemeinsam mit dem Steuerkolben 4 durch eine Feder 9 gegen die Dichtungscheibe 8 in Form eines Rings belastet. Die Dichtungscheibe ist in der Zylinderauskammerung 12 des Gehäuses 1 anliegend zum hydraulischen Hauptzylinder 3 platziert. An die Dichtungsscheibe 8 schließt anliegend der hydraulische Hilfszylinder 5 mit dem Schaltkolben 6 des Steuerkolbens 4 an. Der Steuerkolben 4 des hydraulischen Hauptzylinders 3 ist in seiner Achse durch den Durchgangshohlraum 18 nachgebohrt und vor, bzw. unter dem Schlusskegel 10 sind in den Hohlraum 18 senkrecht einige Löcher 11 nachgebohrt. Weiter ist im Gehäuse 1, in der Achse von seiner Auskammerung 12 , ein Zuleitungskanal 14, der an den hydraulischen Hauptzylinder 3 anschließt, nachgebohrt. Der Kanal 14 dient zugleich zur Ablassung der Druckflüssigkeit aus dem Rückschlagventil. Im Gehäuse 1 sind auch die Verteilungskanäle 15, die an den hydraulischen Hauptzylinder 3 senkrecht geleitet sind und die hydraulisch durch die Durchgangsöffnungen 13 dieses Zylinders 3 an seinen Verschluss an der Dichtungsscheibe 8 verbunden sind, nachgebohrt. Es sind auch die Zuleitungskanäle 16 für die hydraulisch geregelte Öffnung des Rückschlagventils nachgebohrt. Diese sind senkrecht an den hydraulischen Hilfszylinder 5 geleitet und mit ihm hydraulisch mittels einem Kanälchen 7 gleich an dem Zylinderboden verbunden. Alle diese Kanäle 14,15 und 16 sind mit einem üblichen System für den Anschluss der hydraulischen Schläuche an das Gehäuse 1 des Rückschlagventils, für die Dichtung und die Sicherung der Verbindung gegen Ablösung mit Hilfe der Steckbinder in den Öffnungen ausgestattet. Gewöhnlich sind im Gehäuse 1 auch die Löcher für die mechanische Befestigung des Rückschlagventils auf den von ihm geregelten hydraulischen Zylinder nachgebohrt, wie man auf dem Bild 1 und 2 sieht. Die Frontfläche des Schaltkolbens 6 ist an ihrer Kante gegen die Kanälchenmündung 7 abgeschrägt, sodass eine Abflachung für die Anfangsdruckwerte der zugeleiteten Druckflüssigkeit aus dem Kanälchen 7 auf den Schaltkolben 6 eingerichtet ist. Der hydraulische Hauptzylinder 3, die Dichtungsscheibe 8 und der hydraulische Hilfszylinder 5 sind in der gemeinsamen Zylinderauskammerung 12 des Gehäuses 1 des Rückschlagventils nach dem Umkreis mit 0-Ringen gedichtet und axial durch den verschraubten Gewindeverschluss des hydraulischen

Hilfszylinders 5 im Gewinde 19 der Zylinderausklammerung 12 des Gehäuses 1 des Rückschlagventils verklemmt. Als eine Variante kann die axiale Verklemmung durch einen eigenständigen Gewindeverschluss 2, der im Gewinde 19 der Zylinderausklammerung 12 des Gehäuses 1 des Rückschlagventils verschraubt wird, ausgeführt werden, wie es auf dem Bild 2 zu sehen ist. In diesem Fall ist der Gewindeverschluss 2 mit dem Spalt 20 ausgestattet oder bildet ihn durch die ausgeführte Versenkung in seiner Fläche im Stoß mit dem hydraulischen Hilfszylinder 5.

Der Zweck des Spaltes 20 ist die Filtration der Druckflüssigkeit zum Kanälchen 7 zuzuleiten, deshalb ist seine Breite kleiner als der Kanälchendurchschnitt 7. Für die richtige Funktion des Rückschlagventils für die konkrete Spannweite und die gewünschte Menge des Durchflusses ist das Verhältnis der Zwischenkreisfläche des Steuerkolbens 4, der Fläche des Schaltkolbens 6 und der Kanälchenfläche 7 entscheidend. Hinsichtlich der gewünschten Festigkeit des hydraulisch betätigten Rückschlagventils gegen seine ungewünschte Öffnung bei der unvorhergesehenen Druckwertesteigung im Zuleitungskanal 16 bildet die Fläche des Schaltkolbens das 1,6- bis 5-fache der Zwischenkreisfläche des Steuerkolbens 4.

Für die Steuerung und Stabilisierung der Geschwindigkeit der Verschiebung des Schaltkolbens 6 im Hilfszylinder 5 in beiden Richtungen der Bewegung und die Abschwächung der Schwingungen dieses Kolbens 6 ist seine Fläche im Verhältnis 800:1 oder größer zur Kanälchenfläche 7. Dieses und höhere Verhältnisse sichern auch die ausreichende hydrodynamische Abschwächung der Bewegung des Schaltkolbens 6 und so auch die Abschwächung von allen potentiellen Schwingungen. Alternativ kann auch ein Kanälchen 7 im Boden des hydraulischen Hilfszylinder 5 gebohrt werden. Der Boden ist in diesem Fall von der Frontfläche des angeschlossenen Gewindeverschlusses 2 mit dem Spalt 20 für die hydraulische Verbindung des Kanälchens 7 mit dem Zuleitungskanal 16 der hydraulisch geregelten Öffnung des Rückschlagventils abgedeckt. Die Binnenräume des hydraulischen Hauptzylinder 3 ,der Dichtungsscheibe 8 und des hydraulischen Hilfszylinders 5 bilden eine gemeinsame Kammer 17 für die Verschiebung des Steuerkolbens 4 und Schaltkolbens 6. Bei ihrer von der Druckflüssigkeit unbelasteten Stellung ist zwischen den anliegenden Flächen dieser Kolben 4 und 6 ein Zwischenraum 21, ungefähr 1 mm.

Im Arbeitsbetrieb tritt die Druckflüssigkeit ins Rückschlagventil durch den Zuleitungskanal 14 ein, kommt durch den Hohlraum 18 des Steuerkolbens 4 , durch die Radialöffnungen 11 und gemeinsame Kammer 17 zwischen dem Steuerkolben 4 und dem Schaltkolben 6 zur Dichtungsscheibe 8 und durch den Druck drückt die Feder 9 des Schaltkolbens, bzw.hebt seinen Verschlusskegel 10 aus der Dichtungsscheibe 8 und die Flüssigkeit strömt durch die Durchlassöffnungen 13 in die Verteilungskanäle 15 zum hydraulischen Zylinder, der von dem Rückschlagventil betätigt ist, z.B. an die hydraulischen Ständer des mechanisierten Grubenausbaus. Im Moment der Steigerung der Druckwerte der Flüssigkeit in den Verteilungskanälen 15 auf das Niveau ihrer Druckwerte im Zuleitungskanal 14 kommt es zum Stillstand des Flüssigkeitdurchflusses und die Feder 9 verschiebt den Verschlusskegel 10 des Steuerkolbens 4 zurück in die Dichtungsscheibe 8 und der Rückschlagventil schließt sich. In den Verteilungskanälen 15 und so auch in den hydraulischen Ständern des Ausbaus ist die Flüssigkeit eingeschlossen, der Druck eingeschlossen und in den Verteilungskanälen 15 wird aufrecht erhalten, auch bei der Senkung der Druckwerte der Flüssigkeit im Zuleitungskanäl 14. Durch einen Impuls aus dem Aussenraum kann esdamit zur weiteren Steigerung der Druckwerte in den hydraulischen Ständern des Ausbaus und in den Zuleitungskanälen 15 des Rückschlagventils kommen.

Bei einer geregelten Öffnung des hydraulisch betätigten Rückschlagventils, wenn diese seine Funktion genutzt wird, z.B. bei der Füllung der hydraulischen Ständer des mechanisierten Grubenausbaus, ist die Druckflüssigkeit durch den Kanal 16 der gesteuerten Öffnung des Rückschlagventils, durch ein Kanälchen 7 unter den Schaltkolben 6 zugeleitet.Der Schaltkolben beginnt sich zu verschieben , in der Richtung zum Steuerkolben 4 mit einer definierten Geschwindigkeit, die von dem Durchfluss der Druckflüssigkeit durch ein Kanälchen 7 bestimmt ist und auf den Steuerkolben 4 drückt. Weil die Zwischenkreisfläche des Steuerkolbens 4, auf die der Betriebsdruck der Flüssigkeit aus dem Verteilungskanal 15 wirkt, kleiner ist als die Fläche des Schaltkolbens 6 , auf welchen die Druckflüssigkeit zugeleitet wird durch ein Kanälchen 7 aus einem Kanal 16, kommt es zur Verschiebung des Verschlusskegels 10 aus der Dichtungsscheibe 8. Bei diesem Zustand kommt es gleich in der Anfangsphase der Verschiebung des Steuerkolbens 4 , nach der Öffnung der Dichtungsscheibe 8, zu dem Durchfluss der Druckflüssigkeit aus dem Verteilungskanal 15, d.h. zu ihrem Überfliessen aus dem geschlossenen Raum der hydraulischen Ständer des Grubenausbaus durch die Durchflussöffnungen 13 und die Dichtungsscheibe 8 in die gemeinsame Kammer 17 zwischen dem Schaltkolben 6 und dem Steuerkolben 4. Das verursacht die Steigerung der Druckwerte der Druckflüssigkeit in dieser Kammer 17, die als Folge eine langsamere oder keine weitere Bewegung mehr in beiden Kolben 4,6 hat, bis auf die Senkung dieser Druckwerte durch den Abfluss der Flüssigkeit in den Abfluss durch den Kanal 14. Die Senkung der Druckwerte im Raum des Kanals 14 ermöglicht die weitere Bewegung des Steuerkolbens 4 , der vom Schaltkolben 6 gedrückt wird, bis es zur stufenweisen und vollen Öffnung des Rückschlagventils kommt. Bei unterbrochener Wirkung des Drucks im Kanal 16, d.h. bei Befreiung des Drucks unter dem Schaltkolben 6, kommt als Folge der gleichzeitigen Wirkung der Feder 9 und des Drucks im Verteilungskanal 15 zur Verschiebung des Steuerkolbens 4 in der Richtung zu der Dichtungsscheibe 8 und so zur Ventilschließung, d.h. zur wiederholten Schliessung des Raumes im Verteilungskanal 15. Die Geschwindigkeit der Rückverschiebung des Schaltkolbens 6 und des Steuerkolbens 4 hängt von den Druckwerten im Verteilungskanal 15 und vom Verhältnis der Zwischenkreisfläche des Steuerkolbens 4, der Fläche des Schaltkolbens 6 und der Fläche des Kanälchen 7 ab.

## Patentansprüche

1. Das hydraulisch betätigte Rückschlagventil für die Steuerung der hydraulischen Zylinder, das aus dem Gehäuse, wo der hydraulische Hauptzylinder mit dem Steuerkolben angeordnet ist, besteht. Der Steuerkolben ist mit einem Verschlusskegel ausgestattet. Der Steuerkolben ist durch eine Feder gegen die Dichtungsscheibe, die im Durchflussraum der Druckflüssigkeit unter den Kanälen der Zuleitung der Druckflüssigkeit in diesen Zylinder und der Verteilung aus diesem Zylinder, die im Gehäuse angepasst sind, belastet. An den hydraulischen Hauptzylinder ist axial der hydraulische Hilfszylinder mit dem Schaltkolben des Steuerkolbens angeschlossen. Er ist hydraulisch mit einem Zuleitungskanal der gesteuerten Öffnung des Rückschlagventils verbunden. Das Rückschlagventil **zeichnet sich dadurch aus**, dass der Zuleitungskanal (16) der Druckflüssigkeit für die hydraulisch gesteuerte Öffnung des Rückschlagventils hydraulisch mit dem Raum des hydraulischen Hilfszylinders (5) durch ein Kanälchen verbunden ist. Dabei ist die Größe der Fläche des Kanälchens (7) und die Größe von der Fläche des Schaltkolbens (6) des hydraulischen Zylinders (5) im Verhältnis mindestens 1:800 und der Steuerkolben (4) des hydraulischen Hauptzylinders (3) muss für die hydraulische Verbindung des Zuleitungskanales (14) mit dem Verteilungskanal (15) mit einem axialen Durchgangshohlraum (18) mit mindestens einem Radialloch (11) aus diesem Hohlraum ausgemündeten (18) vor dem Verschlusskegel an dem Steuerkolben(4), ausgestattet sein.

2. Das hydraulisch betätigte Rückschlagventil nach den Ansprüchen 1 **zeichnet sich dadurch aus,** dass die Größe der Fläche des Schaltkolbens (6) und der Zwischenkreisfläche des Steuerkolbens (4) im Verhältnis 1,6 bis 5:1 ist.

3. Das hydraulisch betätigte Rückschlagventil nach den Ansprüchen 1 oder 1 und 2 **zeichnet sich dadurch aus**, dass das Kanälchen (7) des hydraulischen Hilfszylinders (5) in seiner Wand angepasst ist.

4. Das hydraulisch betätigte Rückschlagventil nach den Ansprüchen 1 oder 1 und 2 **zeichnet sich dadurch aus**, dass das Kanälchen (7) des hydraulischen Hilfszylinders (5) in seinem Boden, der von einem angeschlossenen Gewindeverschluss (2) mit dem Spalt (20) für die hydraulische Verbindung des Kanälchens (7) mit dem Zuleitungskanal (16) der hydraulisch gesteuerten Öffnung des Rückschlagventils und für die Filtration der Druckflüssigkeit abgedeckt wurde, angepasst ist.

5. Das hydraulisch betätigte Rückschlagventil nach den Ansprüchen 1 und 3 oder 1 und 4 oder 1,2 und 3 oder 1,2 und 4 **zeichnet sich dadurch aus,** dass die Binnenräume des hydraulischen Hauptzylinders (3), der Dichtungsscheibe (8) und des hydraulischen Hilfszylinders (5) eine gemeinsame Kammer (17) für die Verschiebung des Steuerkolbens (4) und des Schaltkolbens (6) bilden.
